# EUROPÄISCHE PATENTSCHRIFT

(11) **EP 3 967 448 B1**
(45) Veröffentlichungstag und Bekanntmachung des Hinweises auf die Patenterteilung: **29.07.2026**
(21) Anmeldenummer: 21193560.6
(22) Anmeldetag: 27.08.2021
(51) Int. Cl.: B23Q 11/00, F16F 15/173

(54) **EINRICHTUNG ZUR DÄMPFUNG VON VIBRATIONEN EINER UM EINE DREHACHSE ROTIERENDEN SPINDEL EINER WERKZEUGMASCHINE**
DEVICE FOR DAMPING VIBRATIONS OF A SPINDLE OF A MACHINE TOOL ROTATING ABOUT AN AXIS OF ROTATION
DISPOSITIF D'AMORTISSEMENT DES VIBRATIONS D'UNE BROCHE D'UNE MACHINE-OUTIL TOURNANT AUTOUR D'UN AXE DE ROTATION

(30) Priorität: 15.09.2020 DE 102020124019
(43) Veröffentlichungstag der Anmeldung: 16.03.2022
(73) Patentinhaber: Präwema Antriebstechnik GmbH, 37269 Eschwege/Werra (DE)
(72) Erfinder: Painczyk, Ralf, 36214 Nentershausen (DE); Reinhardt, Jörg, 99826 Berka v.d.H. (DE)
(74) Vertreter: Cohausz & Florack

(56) Entgegenhaltungen:
- EP-A2- 3 210 718
- BE-A- 648 875
- US-A- 2 722 849

## Beschreibung

Die Erfindung betrifft eine Einrichtung zur Dämpfung von Vibrationen einer um eine Drehachse rotierenden Spindel einer Werkzeugmaschine, wobei die Einrichtung eine im Gebrauch koaxial zur Drehachse der Spindel ausgerichtete zentrale Längsachse aufweist, sowie ein Gehäuse, das zum drehfesten Ankoppeln an die Spindel vorgesehen ist und einen Gehäuseraum umgrenzt, der als koaxial zur zentralen Längsachse ausgerichteter Ringraum ausgebildet ist und um die zentrale Längsachse umläuft, eine ringförmige Dämpfermasse, die in dem Gehäuseraum relativ zur zentralen Längsachse beweglich angeordnet und im Ruhezustand koaxial zur zentralen Längsachse ausgerichtet ist, und mindestens ein Federelement umfasst, über das die Dämpfermasse bezogen auf die Längsachse der Einrichtung mindestens in Umfangsrichtung der Dämpfermasse federnd elastisch beweglich an dem Gehäuse gehalten ist.

In Werkzeugmaschinen, wie beispielsweise Schleif-, Fräs- oder Bohrmaschinen, ist das Werkzeug üblicherweise in einer Werkzeugspindel gehalten, die während des Betriebs um eine Werkzeugachse rotierend angetrieben wird. Dabei kommt es aufgrund technisch unvermeidbarer geometrischer Unzulänglichkeiten, wie Unsymmetrien, von Werkzeugspindel, vom jeweils von ihr gehaltenen Werkzeug oder der Lagerung der Spindel im Gehäuse zu unerwünschten Vibrationen. Diese nehmen mit steigender Drehzahl zu und verursachen nicht nur störende Geräusche, sondern können auch zu erhöhtem Verschleiß der Lagerung führen und die Qualität des Bearbeitungsergebnisses mindern.

Um die Vibrationen zu dämpfen, werden in der Praxis Dämpfermassen, in der Fachsprache auch "Tilger" genannt, eingesetzt, die federnd elastisch an die Werkzeugspindel angekoppelt sind und aufgrund ihrer Massenträgheit die Schwingungsamplitude der durch die Drehung der Spindel ausgelösten Vibrationen mindern.

Ein Beispiel für eine auf einem solchen Tilger basierenden Einrichtung zur Vibrationsdämpfung an schnell drehenden Werkzeugspindeln ist in der DE 10 2004 042 316 B4 beschrieben. Bei diesem Stand der Technik ist das Lager, in dem die Werkzeugspindel drehbar gelagert ist, federnd elastisch im Gehäuse der Werkzeugmaschine abgestützt. Dabei ist am Außenring des Lagers ein Tilger angebracht, der ringförmig ausgestaltet ist, so dass er koaxial um einen Abschnitt der Spindel angeordnet ist. Dabei ist der Tilger mittels eines Feder-Dämpfer-Elements an dem Lageraußenring abgestützt. Dieses Feder-Dämpfer-Element umfasst zum einen mindestens eine Feder, über die der Tilger in bezogen auf die Drehachse der Werkzeugspindel radialer Richtung elastisch an einer Innenfläche des Lagerrings abgestützt ist. Parallel zu der Feder ist zwischen der Außenumfangsfläche des Tilgers und der Innenfläche des Lagers ein als separates Bauteil ausgebildeter Öldämpfer angeordnet, um die Dämpfungswirkung zu verbessern.

Aus dem Stand der Technik ist zudem die US 2722849 A bekannt, welche eine Einrichtung zur Dämpfung von Vibrationen einer um eine Drehachse rotierenden Welle offenbart.

Ein alternatives Konzept für eine Vibrationsdämpfung ist in der DD 232092 B1 beschrieben. Dort wird an Einrichtungen der voranstehend erläuterten Art kritisiert, dass der Tilger nur für eine Erregerfrequenz der Spindel bzw. Welle ausgelegt werden kann und als Alternative für die derart kritisierten Einrichtungen ein Dämpfungssystem vorgeschlagen, bei dem die Dämpfung über Reibung erfolgt. Hierzu wird gemäß diesem Stand der Technik am Ende der Werkzeugspindel über ein dort befestigtes Halteteil ein Reibbelag angeordnet, der mit einem Reibbelag zusammenwirkt, der axial verstellbar und elastisch abgestützt an einem Lagerteil der Lagerung befestigt ist, in der die Spindel drehbar gelagert ist. Durch Verstellung der Axialposition des Reibbelags können die Reibkräfte und damit einhergehend die Dämpfungswirkung eingestellt werden.

Ausgehend von dem voranstehend erläuterten Stand der Technik hat sich die Aufgabe gestellt, eine Einrichtung zur Dämpfung von Vibrationen zu schaffen, bei der es auf einfache Weise möglich ist, die Dämpfungswirkung an die jeweiligen Anforderungen anzupassen.

Die Erfindung hat diese Aufgabe durch eine Vorrichtung gelöst, die mindestens die in Anspruch 1 angegebenen Merkmale besitzt.

Vorteilhafte Ausgestaltungen der Erfindung sind in den abhängigen Ansprüchen angegeben und werden wie der allgemeine Erfindungsgedanke nachfolgend im Einzelnen erläutert.

Eine erfindungsgemäße Einrichtung zur Dämpfung von Vibrationen einer um eine Drehachse rotierenden Spindel einer Werkzeugmaschine weist somit in Übereinstimmung mit dem eingangs erläuterten Stand der Technik eine im Gebrauch koaxial zur Drehachse der Spindel ausgerichtete zentrale Längsachse auf und umfasst
- ein Gehäuse, das zum drehfesten Ankoppeln an die Spindel vorgesehen ist und einen ringförmigen Gehäuseraum umgrenzt, der als koaxial zur zentralen Längsachse ausgerichteter Ringraum ausgebildet ist und um die zentrale Längsachse umläuft,
- eine ringförmige Dämpfermasse, die in dem Gehäuseraum relativ zur zentralen Längsachse beweglich angeordnet und im Ruhezustand koaxial zur zentralen Längsachse ausgerichtet ist,
   und
- mindestens ein Federelement, über das die Dämpfermasse bezogen auf die Längsachse der Einrichtung mindestens in Umfangsrichtung der Dämpfermassefedernd elastisch beweglich an dem Gehäuse gehalten ist.

Gemäß der Erfindung ist bei einer solchen Einrichtung zwischen einer Umfangsfläche der Dämpfermasse und einer Innenfläche des Gehäuses ein Spalt vorhanden, der mit einer viskosen Dämpferflüssigkeit gefüllt ist, wobei die lichte Weite des mit der viskosen Flüssigkeit gefüllten Spalts einstellbar ist.

Das Gehäuse einer erfindungsgemäßen Vibrationsdämpfungseinrichtung ist somit im Gebrauch drehfest mit der jeweils zu dämpfenden Spindel einer Werkzeugmaschine verbunden. Gleichzeitig ist die Dämpfermasse über ein geeignetes Federelement federnd elastisch in dem Gehäuse gehalten. Aufgrund der Massenträgheit der Dämpfermasse kommt es daher im Gebrauch zu Relativbewegungen zwischen der Dämpfermasse und dem Gehäuse. Dementsprechend bewegen sich auch die Flächen von Gehäuse und Dämpfermasse, die den mit der viskosen Flüssigkeit gefüllten Spalt begrenzen. Infolgedessen wirken auf die im Spalt vorhandene Flüssigkeit Scherkräfte, die wiederum innere Reibung in der viskosen Flüssigkeit erzeugen, über die dementsprechend die Bewegung der Dämpfermasse abgebremst wird. Die in der im Spalt enthaltene Flüssigkeit erzeugte Reibung verändert sich dabei proportional zur lichten Weite des Spalts. Bei größeren Spaltabständen ist die Reibung und damit einhergehend die Bremswirkung geringer als bei engen Spaltweiten. Durch die erfindungsgemäß vorgesehene Verstellbarkeit der Spaltweite kann somit das Dämpfungsverhalten einer erfindungsgemäßen Vorrichtung auf einfache Weise an die jeweiligen Erfordernisse angepasst werden.

Durch das in einer erfindungsgemäßen Einrichtung vorgesehene mindestens eine Federelement erhält die Dämpfungsmasse die für die Vibrationsdämpfung erforderliche federnd elastische Beweglichkeit. Diese kann in einer radial zur zentralen Längsachse, in einer achsparallel zur zentralen Längsachse und / oder in Umfangsrichtung der Dämpfermasse ausgerichteten Richtung ausgerichtet sein, wobei sich eine optimale Wirkung ergibt, wenn eine federnd elastische Beweglichkeit in jeder der genannten Richtungen ermöglicht ist.

Die federnd elastische Halterung der Dämpfermasse an dem Gehäuse kann bei einer erfindungsgemäßen Einrichtung mittels eines geeignet geformten Federelements in jeder geeigneten Weise erfolgen, die eine ausreichende Beweglichkeit der Dämpfermasse sichert. So kann die Dämpfermasse mittels des Federelements an dem Gehäuse hängend oder auf dem Gehäuse stehend im Gehäuseraum angeordnet sein.

Durch die Wahl einer geeigneten Feder-Dämpfermasse-Kombination kann in an sich bekannter Weise ein breites Frequenzband abgedeckt werden, in dem die erfindungsgemäße Einrichtung wirksam ist. Die Dämpfung wird dann, wie erläutert, über das zwischen Gehäuse und Dämpfermasse vorhandene Spaltmaß und die Viskosität der jeweils verwendeten Dämpferflüssigkeit eingestellt.

Als besonders günstig nicht nur im Hinblick auf die federnde Wirkung, sondern auch auf die Einstellbarkeit des mit der viskosen Flüssigkeit gefüllten Spaltes hat es sich hier erwiesen, wenn das Federelement stabförmig ausgebildet und seine Längsachse im Ruhezustand achsparallel zur zentralen Längsachse ausgerichtet ist. Mit einem derart stabförmigen Federelement kann eine federnd elastische Bewegung des Dämpfungselements in sämtliche der drei voranstehend genannten Freiheitsgrade ohne Weiteres bewerkstelligt werden.

Insbesondere bei der Verwendung stabförmiger, schlanker Federelemente ergibt sich eine gleichmäßige und besonders wirkungsvolle federnd elastische Abstützung des Dämpferelements einer erfindungsgemäßen Einrichtung dann, wenn die Dämpfermasse mittels mindestens drei Federelementen an dem Gehäuse abgestützt ist.

Indem die Federelemente in regelmäßigen Winkelabständen um die zentrale Längsachse verteilt angeordnet werden, lässt sich eine gleichmäßige Halterung der Dämpfermasse und damit einhergehend eine gleichmäßige Dämpfungswirkung sichern.

Mit Hinblick auf die praktische Umsetzung der Erfindung besonders vorteilhaft ist es, dass gemäß Ausgestaltung der Erfindung der Gehäuseraum als koaxial zur zentralen Längsachse ausgerichteter Ringraum ausgebildet ist, so dass die ringförmige Dämpfermasse problemlos in dem Gehäuseraum eingesetzt werden kann und ungleichförmige Masseverteilungen des Gehäuses, die andernfalls möglicherweise aufwändig ausgeglichen werden müssten, vermieden werden.

Eine einfache Einstellbarkeit der lichten Weite des mit der viskosen Dämpferflüssigkeit gefüllten Spalts lässt sich dadurch erreichen, dass der mit der viskosen Flüssigkeit gefüllte Spalt zwischen einer ersten Schrägfläche, die am äußeren Umfang der Dämpfermasse ausgebildet ist und bezogen auf die zentrale Längsachse schräg ausgerichtet ist, und einer zweiten Schrägfläche ausgebildet ist, die an der dem Gehäuseraum zugeordnete Innenseite des Gehäuses gegenüberliegend zur Schrägfläche der Dämpfermasse angeordnet und entsprechend der schrägen Ausrichtung der ersten Schrägfläche bezogen auf die zentrale Längsachse schräg ausgerichtet ist, und eine Stellvorrichtung zum Einstellen der relativen Lage von Dämpfermasse und Gehäuse in achsparallel zur zentralen Längsachse ausgerichteter Richtung vorgesehen ist.

Im Fall, dass der Gehäuseraum ringförmig ist, hat es sich dabei mit Blick auf die Wirksamkeit der Dämpfungsflüssigkeit als dämpfendes Medium als besonders vorteilhaft herausgestellt, wenn die Schrägflächen von Dämpfermasse und Gehäuse jeweils als um die zentrale Längsachse umlaufende Konusflächen ausgebildet sind.

Denkbar ist es, die einander zugeordneten, den mit der viskosen Dämpferflüssigkeit gefüllten Spalt begrenzenden Flächen unterschiedliche oder speziell geformte Konturen zu verleihen, um die auf die Dämpferflüssigkeiten lokal wirkenden Kräfte und damit einhergehend die in der Flüssigkeit entstehende Reibung direkt zu beeinflussen. Gemäß einer besonders einfach zu realisierenden und dennoch hoch wirksamen Ausgestaltung der Erfindung sind die Schrägflächen jedoch parallel zueinander ausgerichtet, wie es beispielsweise der Fall ist, wenn die Schrägflächen von Dämpfungsmasse und Gehäuse jeweils um die zentrale Längsachse umlaufende Konusflächen sind, bei denen die konisch zulaufende Schrägfläche an der äußeren Umfangsseite der Dämpfermasse in dem von der konisch trichterförmig geformten Schrägfläche des Gehäuses umgrenzten Raum sitzt.

Die bei einer erfindungsgemäßen Einrichtung zwecks Einstellung der relativen Lage von Dämpfermasse und Gehäuse und damit einhergehend der Weite des mit der viskosen Flüssigkeit gefüllten Spalts vorgesehene Stellvorrichtung umfasst beispielsweise ein Trägerelement, das achsparallel zur zentralen Längsachse verschiebbar an dem Gehäuse in einer jeweiligen Axialposition gehalten ist und an dem das mindestens eine, die Dämpfermasse haltende Federelement gehäuseseitig angekoppelt ist, und ein zwischen dem Gehäuse und dem Trägerelement wirkendes Stellelement, das das Trägerelement in der jeweiligen Axialposition hält und erforderlichenfalls zum Verstellen des Trägerelements aus der Fixierstellung gelöst werden kann. Bei dem Stellelement kann es sich beispielsweise um eine Stellschraube oder desgleichen handeln, durch die das Trägerelement in das Gehäuse abgesenkt oder aus diesem herausbewegt werden kann. Zusätzlich können Fixierelemente vorgesehen sein, um das Trägerelement in der jeweiligen Solllage zu fixieren oder es kann das Stellelement selbst zu diesem Zweck genutzt werden.

Eine insbesondere in Kombination mit einem Gehäuse, dessen Gehäuseraum ringförmig ist, für die Praxis wichtige und einfach realisierbare Ausgestaltung der Erfindung sieht vor, dass das Trägerelement ein ringförmig um die zentrale Längsachse umlaufendes, die Längsachse ringförmig umschließendes Element, das beispielsweise nach Art einer Platte ausgestaltet sein kann, ist. Ein solches Trägerelement kann zum insbesondere dichten Verschließen einer entsprechend geformten Gehäuseöffnung genutzt werden. So kann mit einem derart geformten Trägerelement eine Öffnung verschlossen werden, die aus fertigungs- oder montagetechnischen Gründen an einer Stirnseite des Gehäuses vorgesehenen ist, wobei das Trägerelement den Gehäuseraum dann an der betreffenden Stirnseite gegenüber der Umgebung abdichtet.

Der erfindungsgemäß mit viskoser Flüssigkeit gefüllte Spalt zwischen Gehäuse und Dämpfermasse lässt sich dabei dadurch besonders einfach gegenüber der Umgebung abdichten, dass der Gehäuseraum, in dem der betreffende Spalt vorgesehen ist, gegenüber der Umgebung vollständig abgedichtet ist mit der viskosen Dämpferflüssigkeit gefüllt ist.

Für die erfindungsgemäßen Zwecke geeignet sind alle viskosen Flüssigkeiten, die, wenn sie in einen Spalt mit geeigneter lichter Weite gefüllt sind, in Folge der dann im Gebrauch wirkenden Scherkräfte ausreichend innere Reibung erzeugen, um die Bewegungen der Dämpfermasse einer erfindungsgemäßen Einrichtung abzudämpfen. Hierzu besonders geeignet sind Öle mit einer Nennviskosität von > 5 mm²/s.

Als Anhalt für die lichte Weite WL des mit der viskosen Flüssigkeit gefüllten Spalts kann in der Praxis ein Bereich von 0,1 mm ≤ WL < 1,0 mm herangezogen werden.

Nachfolgend wird die Erfindung anhand einer ein Ausführungsbeispiel darstellenden Zeichnung näher erläutert.

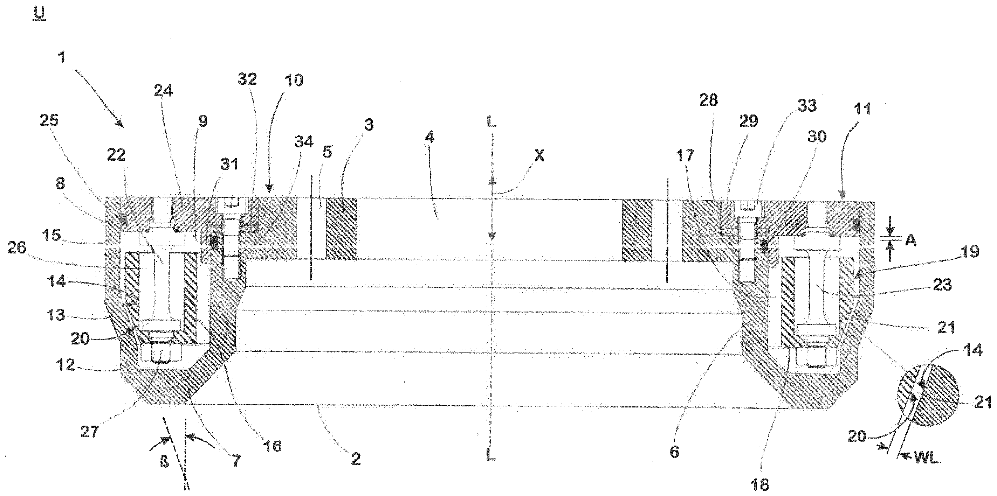

Die einzige Figur zeigt eine Einrichtung 1 zur Vibrationsdämpfung einer hier nicht dargestellten Spindel einer hier ebenso nicht dargestellten Werkzeugmaschine, bei der es sich beispielsweise um eine Fräsmaschine handeln kann.

Die Einrichtung 1 weist eine zentrale Längsachse L auf, die im Gebrauch mit der Drehachse der Spindel zusammenfällt, deren Vibrationen durch die Einrichtung 1 gedämpft werden sollen.

Dabei umfasst die Einrichtung 1 ein Gehäuse 2, das einen um die zentrale Längsachse L umlaufenden, ringförmigen Halteabschnitt 3 hat. Der Halteabschnitt 3 ist normal zur zentralen Längsachse L ausgerichtet und umgrenzt eine zentrale Öffnung 4, in der im Gebrauch die Spindel sitzt. Zum drehfesten Ankoppeln der Einrichtung 1 an die Spindel sind achsparallel zur zentralen Längsachse L ausgerichtete, in gleichen Winkelabständen um die zentrale Längsachse L verteilte Durchgangsöffnungen 5 in den Halteabschnitt 3 eingeformt.

Der Halteabschnitt 3 geht über in einen inneren Wandabschnitt 6 des Gehäuses 2, der sich achsparallel zur zentralen Längsachse L erstreckt und ringförmig um die zentrale Längsachse L umläuft. An den inneren Wandabschnitt 6 ist ein ebenfalls ringförmig um die zentrale Längsachse L umlaufender, normal zur zentralen Längsachse L ausgerichteter Boden 7 des Gehäuses 2 angeschlossen.

Den umfangseitig äußeren Abschluss des Gehäuses 2 bildet ein äußerer Wandabschnitt 8, der wie der innere Wandabschnitt 6 ringförmig um die zentrale Längsachse L umläuft. Der innere Wandabschnitt 6, der Boden 7 und der äußere Wandabschnitt 8 des Gehäuses umgrenzen so einen ringförmig um die zentrale Längsachse L umlaufenden, d.h. als Ringraum ausgebildeten Gehäuseraum 9 des Gehäuses 2, das an seiner dem Boden 7 gegenüberliegenden Stirnseite 10 eine ebenfalls ringförmige Öffnung 11 aufweist.

Ausgehend vom Boden 7 hat der äußere Wandabschnitt 8 einen ersten Absatz 12, der an seinem vom Boden 7 abgewandten Ende in eine Wandsektion 13 übergeht. Die dem Gehäuseraum 9 zugeordnete Innenfläche der Wandsektion 13 ist als Schrägfläche 14 ausgebildet, indem sie in Bezug auf die zentrale Längsachse L nach Art der Innenfläche eines Trichters konisch schräg geformt ist, so dass sich der Gehäuseraum 9 im Bereich des Wandsektion 13 in Richtung der Öffnung 11 des Gehäuses 2 erweitert. Der spitze Winkel ß, unter dem die Innenfläche 14 in Bezug auf die zentrale Längsachse L ausgerichtet ist, beträgt dabei beispielsweise 20°.

An die mit der schrägen Innenfläche 14 versehene Wandsektion 13 des Wandabschnitts 8 ist eine schließlich um die zentrale Längsachse L umlaufende Wandsektion 15 angeformt, deren Innenfläche achsparallel zur zentralen Längsachse L ausgerichtet ist. Mit ihrem freien Rand umgrenzt die Wandsektion 15 die Öffnung 11.

Im Gehäuseraum 9 ist eine ringförmige, aus massivem Stahlwerkstoff bestehende Dämpfermasse 16 angeordnet, die im in der Figur dargestellten Ruhezustand koaxial zur zentralen Längsachse L ausgerichtet ist. Der Innendurchmesser, der Außendurchmesser, die Höhe und die Form der Dämpfermasse 16 sind so gewählt, dass die Dämpfermasse 16 nie Kontakt zum Gehäuse 2 hat.

Dementsprechend weist die Dämpfermasse 16 eine achsparallel zur zentralen Längsachse L ausgerichtete Innenumfangsfläche 17, eine normal zur zentralen Längsachse L ausgerichtete Bodenfläche 18 sowie eine ebenfalls achsparallel zur zentralen Längsachse L ausgerichtete, gegenüberliegend zur Innenfläche der umlaufenden Wandsektion 13 angeordnete Außenumfangsfläche 19 auf.

Zwischen der Bodenfläche 18 und der Außenumfangsfläche 19 hat die Dämpfermasse 16 an ihrem Außenumfang eine umlaufende Schrägfläche 20, die parallel zur Schrägfläche 14 verläuft und dementsprechend nach Art einer konisch in Richtung des Bodens 7 des Gehäuses 2 zulaufenden Spitze in dem von der Schrägfläche 14 an seiner Außenseite begrenzten Abschnitt des Gehäuseraums 9 sitzt.

Zwischen den einander zugeordneten Schrägflächen 14 und 20 von Gehäuse 2 und Dämpfermasse 16 ist auf diese Weise ein Spalt 21 mit einer lichten Weite WL gebildet, die als Lot auf die Schrägflächen 14,20 gemessener Abstand der Schrägflächen 14 und 20 ermittelt wird.

Die Dämpfermasse 16 ist mittels Federelementen 22,23 hängend an einem Trägerelement 24 gehalten, das mit Spiel in der Öffnung 11 des Gehäuses 2 sitzt und auf diese Weise den Gehäuseraum 9 gegenüber der Umgebung U abgrenzt.

In die Außenumfangsfläche des Trägerelements 24 ist eine Ringdichtung 25 eingelassen, die gegen die die Öffnung 11 umgrenzende Innenumfangsfläche des äußeren Wandabschnitts 8 wirkt, so dass der zwischen dem Trägerelement 24 und dem Wandabschnitt 8 vorhandene Fügespalt abgedichtet ist.

Die Federelemente 22,23 sind stabförmig geformt und sitzen in Sacklochöffnungen 26, die von deren dem Trägerelement 24 zugeordneten Stirnseite her in die Dämpfermasse 16 eingeformt sind. An ihren Enden weisen die aus einem konventionellen Federstahl, wie beispielsweise dem unter der Bezeichnung 60MnSiCr4 genormten Stahl, bestehenden Federelemente 22,23 in üblicher Weise an ihnen befestigte Gewindestücke auf, von denen das eine Gewindestück in eine Gewindeöffnung des Trägerelements 24 und das andere Gewindestück durch eine in den Boden der jeweiligen Sacklochöffnung 26 eingeformte Durchgangsöffnung geführt und durch eine von der Außenseite der Dämpfungsmasse 16 her auf das über die Bodenfläche 18 hinausstehende Ende des Gewindestücks aufgeschraubte Mutter 27 fixiert ist.

Das Trägerelement 24 kann über eine achsparallel zur zentralen Längsachse L gemessene Strecke A von beispielsweise 1 mm in der Öffnung 11 achsparallel zur zentralen Längsachse L verschoben werden, um den Abstand der Dämpfermasse 16 und damit einhergehend die lichte Weite WL des Spalts 21 zu verstellen. Die achsparallel zur zentralen Längsachse L gemessene wirksame Länge der Federelemente 22,23 ist dabei so bemessen, dass selbst bei maximal in die Öffnung 11 eingeschobenem Trägerelement 24 die lichte Weite WL > 0 ist.

Um die Verstellbarkeit des Trägerelements 24 in axialer Richtung X innerhalb der Öffnung 11 zu ermöglichen, ist in den dem Gehäuseraum 9 zugeordneten inneren Randbereich des Halteabschnitts 3 des Gehäuses 2 ein um die zentrale Längsachse L umlaufender Absatz 28 eingeformt, in dem der innere Randbereich 29 des Trägerelements 24 mit Spiel sitzt.

Der zwischen der Innenumfangsfläche des Halteabschnitts 3 und dem inneren Außenumfang des Trägerelements 24 vorhandene Fügespalt ist durch eine Ringdichtung 30 abgedichtet, die in die Innenumfangsfläche des inneren Wandabschnitts 6 eingelassen ist und gegen einen umlaufenden, in den Gehäuseraum 9 vorstehenden Führungsabsatz 31 des Trägerelements 24 wirkt.

Zwischen dem inneren Randbereich 29 des Trägerelements 24 und dem normal zur zentralen Längsachse L ausgerichteten Boden des Absatzes 28 ist ein elastisches Element 32 angeordnet, das einer Kompression eine achsparallel zur zentralen Längsachse L ausgerichtete elastische Reaktionskraft entgegensetzt.

Als Stellelemente 33 für die Einstellung der axialen Position des Trägerelements 24 in der Öffnung 11 sind achsparallel zur zentralen Längsachse L ausgerichtete Schrauben vorgesehen, die durch in regelmäßigen Winkelabständen um die zentrale Längsachse L verteilt im inneren Randbereich 29 des Trägerelements 24 angeordnete Durchgangsbohrungen geführt und in den Halteabschnitt 3 eingeformte Gewinde-Sacklochbohrungen 34 eingeschraubt sind. Durch Anziehen der Stellelemente 33 kann dementsprechend das Trägerelement 24 gegen die vom elastischen Element 32 ausgeübte elastische Reaktionskraft in die Öffnung 11 eingesenkt werden, bis die Blockhöhe des elastischen Elements 32 und damit die maximale Einsenkung erreicht sind.

Einhergehend mit der in den Gehäuseraum 9 hinein gerichteten Bewegung des Trägerelements 24 verringert sich die lichte Weite WL des Spalts 21 zwischen den Schrägflächen 14 und 20 von Gehäuse 2 und Dämpfermasse 16. Die minimale Spaltweite WL ist erreicht, wenn das Trägerelement 24 maximal tief in die Öffnung 11 des Gehäuseraums 9 eingesenkt ist.

Soll die lichte Weite WL des Spalts 21 vergrößert werden, so werden die Stellelemente 32 gelöst und das Trägerelement 24 durch die vom elastischen Element 32 ausgeübte Reaktionskraft angehoben, so dass sich der Abstand zwischen der Dämpfermasse 16 und dem Boden 9 des Gehäuses 2 und damit einhergehend die Weite WL des Spalts 21 vergrößert.

Der Gehäuseraum 9 ist vollständig mit einer viskosen Dämpferflüssigkeit, nämlich beispielsweise einem Öl der Sorte HLP46 (gemäß DIN 51524 Teil 2) gefüllt, die insbesondere auch den Spalt 21 ausfüllt. Aufgrund der im Gebrauch dort stattfindenden Relativbewegung der eng benachbarten Schrägflächen 14,20 entsteht in der Dämpferflüssigkeit speziell im Spalt 21 innere Reibung, die eine effektive Dämpfung der schwingenden Bewegungen der Dämpfermasse 16 nach sich zieht.

Durch die hier beschriebene Möglichkeit der Verstellung der Spaltweite WL kann die im Spalte 21 in der Dämpferflüssigkeit entstehende Reibung und damit einhergehend das Dämpfungsverhalten der Einrichtung 1 direkt beeinflusst werden.

### BEZUGSZEICHEN

- 1: Einrichtung zur Vibrationsdämpfung
- 2: Gehäuse
- 3: Halteabschnitt des Gehäuses 2
- 4: zentrale Öffnung des Gehäuses 2
- 5: Durchgangsöffnungen
- 6: innerer Wandabschnitt des Gehäuses 2
- 7: Boden des Gehäuses 2
- 8: äußerer Wandabschnitt des Gehäuses 2
- 9: Gehäuseraum des Gehäuses 2
- 10: zum Boden gegenüberliegende Stirnseite des Gehäuses 2
- 11: ringförmige Öffnung des Gehäuses 2
- 12: Absatz des äußeren Wandabschnitts 8
- 13: Wandsektion des äußeren Wandabschnitts 8
- 14: Schrägfläche des Gehäuses 2
- 15: Wandsektion des äußeren Wandabschnitts 8
- 16: Dämpfermasse
- 17: Innenumfangsfläche der Dämpfermasse 16
- 18: Bodenfläche der Dämpfermasse 16
- 19: Außenumfangsfläche der Dämpfermasse 16
- 20: Schrägfläche der Dämpfermasse 16
- 21: Spalt
- 22,23: Federelemente
- 24: Trägerelement
- 25: Ringdichtung
- 26: Sacklochöffnungen
- 27: Mutter
- 28: Absatz
- 29: innerer Randbereich des Trägerelements 24
- 30: Ringdichtung
- 31: Führungsabsatz
- 32: elastisches Element
- 33: Stellelemente
- 34: Gewinde-Sacklochbohrungen

- A: Strecke
- ß: Winkel
- L: zentrale Längsachse der Einrichtung 1
- U: Umgebung
- WL: lichte Weite des Spalts 21
- X: axiale Richtung

## Patentansprüche

1. Einrichtung zur Dämpfung von Vibrationen einer um eine Drehachse rotierenden Spindel einer Werkzeugmaschine, wobei die Einrichtung (1) eine im Gebrauch koaxial zur Drehachse der Spindel ausgerichtete zentrale Längsachse (L) aufweist sowie
- ein Gehäuse (2), das zum drehfesten Ankoppeln an die Spindel vorgesehen ist und einen ringförmigen Gehäuseraum (9) umgrenzt, der als koaxial zur zentralen Längsachse (L) ausgerichteter Ringraum ausgebildet ist und um die zentrale Längsachse (L) umläuft,
- eine ringförmige Dämpfermasse (16), die in dem Gehäuseraum (9) relativ zur zentralen Längsachse (L) beweglich angeordnet und im Ruhezustand koaxial zur zentralen Längsachse (L) ausgerichtet ist,
und
- mindestens ein Federelement (22,23) umfasst, über das die Dämpfermasse (16) bezogen auf die zentrale Längsachse (L) der Einrichtung (1) mindestens in Umfangsrichtung der Dämpfermasse (16) federnd elastisch beweglich an dem Gehäuse (2) gehalten ist,
**dadurch gekennzeichnet, dass.**
zwischen einer Umfangsfläche (14) der Dämpfermasse (16) und einer Innenfläche (20) des Gehäuses (2) ein Spalt (21) vorhanden ist, der mit einer viskosen Dämpferflüssigkeit gefüllt ist und **dass** die lichte Weite (WL) des mit der viskosen Flüssigkeit gefüllten Spalts (21) einstellbar ist.

2. Einrichtung nach Anspruch 1, **dadurch gekennzeichnet, dass** das Federelement (22,23) in einer achsparallel zur zentralen Längsachse (L), in einer radial zur zentralen Längsachse (L) und / oder in Umfangsrichtung der Dämpfermasse (16) ausgerichteten Richtung federnd elastisch ist.

3. Einrichtung nach Anspruch 2, **dadurch gekennzeichnet, dass** das Federelement (22,23) stabförmig ausgebildet ist und seine Längsachse (L) im Ruhezustand achsparallel zur zentralen Längsachse (L) ausgerichtet ist.

4. Einrichtung nach einem der voranstehenden Ansprüche, **dadurch gekennzeichnet, dass** die Dämpfermasse (16) mittels mindestens drei Federelementen (22,23) an dem Gehäuse (2) gehalten ist.

5. Einrichtung nach Anspruch 4, **dadurch gekennzeichnet**, d a s s die Federelemente (22,23) in regelmäßigen Winkelabständen um die zentrale Längsachse (L) verteilt angeordnet sind.

6. Einrichtung nach einem der voranstehenden Ansprüche, **dadurch gekennzeichnet, dass** der mit der viskosen Flüssigkeit gefüllte Spalt (21) zwischen einer ersten Schrägfläche (20), die am äußeren Umfang der Dämpfermasse (16) ausgebildet ist und bezogen auf die zentrale Längsachse (L) schräg ausgerichtet ist, und einer zweiten Schrägfläche (14) ausgebildet ist, die an der dem Gehäuseraum (9) zugeordnete Innenseite des Gehäuses (2) gegenüberliegend zur Schrägfläche (20) der Dämpfermasse (16) angeordnete und entsprechend der schrägen Ausrichtung der ersten Schrägfläche (20) bezogen auf die zentrale Längsachse (L) schräg ausgerichtet ist, und **dass** eine Stellvorrichtung zum Einstellen der relativen Lage von Dämpfermasse (16) und Gehäuse (2) in achsparallel zur zentralen Längsachse (L) ausgerichteter Richtung (X) vorgesehen ist.

7. Einrichtung nach Anspruch 5 und 6, **dadurch gekennzeichnet, dass** die Schrägflächen (14,20) von Dämpfermasse (16) und Gehäuse (2) jeweils als um die zentrale Längsachse (L) umlaufende Konusflächen ausgebildet sind.

8. Einrichtung nach einem der Ansprüche 6 oder 7, **dadurch gekennzeichnet, dass** die Schrägflächen (14,18) parallel zueinander ausgerichtet sind.

9. Einrichtung nach einem der Ansprüche 6, 7 oder 8, **dadurch gekennzeichnet, dass** die Stellvorrichtung zum Einstellen der relativen Lage von Dämpfermasse (16) und Gehäuse (2)
- ein Trägerelement (24), das achsparallel zur zentralen Längsachse (L) verschiebbar an dem Gehäuse (2) in einer jeweiligen Axialposition gehalten ist und an dem das mindestens eine, die Dämpfermasse (16) haltende Federelement (22,23) gehäuseseitig angekoppelt ist,
und
- ein zwischen dem Gehäuse (2) und dem Trägerelement (24) wirkendes, Stellelement (33) umfasst, das das Trägerelement (24) in der jeweiligen Axialposition hält.

10. Einrichtung nach Anspruch 9, **dadurch gekennzeichnet, dass** das Trägerelement (24) als ein die zentrale Längsachse (L) ringförmig umschließendes Element ausgebildet ist.

11. Einrichtung nach Anspruch 9 oder 10, **dadurch**
**gekennzeichnet, dass** das Trägerelement (24) in einer Öffnung (11) sitzt, die an einer Stirnseite (10) des Gehäuses (2) vorgesehen ist, und d a s s das Trägerelement (24) den Gehäuseraum (9) an dieser Stirnseite (10) gegenüber der Umgebung (U) abdichtet.

12. Einrichtung nach einem der voranstehenden Ansprüche, **dadurch gekennzeichnet, dass** der Gehäuseraum (9) gegenüber der Umgebung (U) vollständig abgedichtet ist und **dass** der Gehäuseraum (9) mit der viskosen Dämpferflüssigkeit gefüllt ist.

13. Einrichtung nach einem der voranstehenden Ansprüche, **dadurch gekennzeichnet, dass** die viskose Dämpferflüssigkeit ein Öl mit einer Nennviskosität > 5 mm²/s ist.

14. Einrichtung nach einem der voranstehenden Ansprüche, **dadurch gekennzeichnet, dass** die lichte Weite (WL) des mit der viskosen Flüssigkeit gefüllten Spalts (21) 0,1 - 1,0 mm beträgt.

## Claims

1. Device for damping vibrations of a spindle of a machine tool rotating about an axis of rotation, the device (1) having a central longitudinal axis (L) which, in use, is aligned coaxially with the axis of rotation of the spindle, and
- a housing (2) which is provided for rotationally fixed coupling to the spindle and defines an annular housing space (9) which is designed as an annular space aligned coaxially with the central longitudinal axis (L) and surrounds the central longitudinal axis (L),
- an annular damper mass (16), which is arranged in the housing space (9) so as to be movable relative to the central longitudinal axis (L) and is aligned coaxially with the central longitudinal axis (L) in the rest state,
and
- comprises at least one spring element (22, 23), via which the damper mass (16) is held on the housing (2) so as to be spring elastically movable at least in the circumferential direction of the damper mass (16) with respect to the central longitudinal axis (L) of the device (1),
**characterized in that**
a gap (21) is present between a circumferential surface (14) of the damper mass (16) and an inner surface (20) of the housing (2), which gap is filled with a viscous damper fluid, and **in that** the clear width (WL) of the gap (21) filled with the viscous fluid is adjustable.

2. Device according to claim 1, **characterized in that** the spring element (22, 23) is spring elastic in a direction axially parallel to the central longitudinal axis (L), in a direction radially to the central longitudinal axis (L) and/or in the circumferential direction of the damper mass (16).

3. Device according to claim 2, **characterized in that** the spring element (22, 23) is rod-shaped and its longitudinal axis (L) is aligned axially parallel to the central longitudinal axis (L) in the rest state.

4. Device according to any one of the preceding claims, **characterized in that** the damper mass (16) is held on the housing (2) by means of at least three spring elements (22, 23).

5. Device according to claim 4, **characterized in that** the spring elements (22, 23) are arranged at regular angular intervals around the central longitudinal axis (L).

6. Device according to any one of the preceding claims, **characterized in that** the gap (21) filled with the viscous liquid is formed between a first inclined surface (20), which is formed on the outer circumference of the damper mass (16) and is oriented obliquely with respect to the central longitudinal axis (L), and a second inclined surface (14), which is arranged on the inner side of the housing (2) associated with the housing space (9) opposite the inclined surface (20) of the damper mass (16) and is aligned obliquely in relation to the central longitudinal axis (L) in accordance with the oblique alignment of the first inclined surface (20), and **in that** an adjusting device is provided for adjusting the relative position of the damper mass (16) and housing (2) in a direction (X) aligned axially parallel to the central longitudinal axis (L).

7. Device according to claims 5 and 6, **characterized in that** the inclined surfaces (14, 20) of the damper mass (16) and housing (2) are each designed as conical surfaces surrounding the central longitudinal axis (L).

8. Device according to any one of claims 6 or 7, **characterized in that** the inclined surfaces (14, 18) are aligned parallel to each other.

9. Device according to any one of claims 6, 7 or 8, **characterized in that** the adjusting device for adjusting the relative position of damper mass (16) and housing (2) comprises
- a carrier element (24) which is held moveable on the housing (2) in a respective axial position so as to be axially parallel to the central longitudinal axis (L) and to which the at least one spring element (22, 23) holding the damper mass (16) is coupled on the housing side,
and
- an adjusting element (33) acting between the housing (2) and the carrier element (24), which holds the carrier element (24) in the respective axial position.

10. Device according to claim 9, **characterized in that** the carrier element (24) is designed as an element annularly enclosing the central longitudinal axis (L).

11. Device according to claim 9 or 10, **characterized in that** the carrier element (24) is seated in an opening (11) which is provided on an end face (10) of the housing (2), and **in that** the carrier element (24) seals the housing space (9) at this end face (10) with respect to the environment (U).

12. Device according to any one of the preceding claims, **characterized in that** the housing space (9) is completely sealed off from the environment (U) and **in that** the housing space (9) is filled with the viscous damper fluid.

13. Device according to any one of the preceding claims, **characterized in that** the viscous damper fluid is an oil with a nominal viscosity > 5 mm²/s.

14. Device according to any one of the preceding claims, **characterized in that** the clear width (WL) of the gap (21) filled with the viscous fluid is 0.1 - 1.0 mm.

## Revendications

1. Dispositif d'amortissement de vibrations d'une broche d'une machine-outil tournant autour d'un axe de rotation, dans lequel le dispositif (1) présente un axe longitudinal central (L) orienté coaxialement par rapport à l'axe de rotation de la broche en fonctionnement, ainsi que
- un boîtier (2) qui est destiné à être accouplé solidairement en rotation à la broche et délimite un espace de boîtier (9) en forme d'anneau, qui est réalisé en tant qu'espace annulaire orienté coaxialement par rapport à l'axe longitudinal central (L) et tourne autour de l'axe longitudinal central (L),
- une masse amortissante (16) en forme d'anneau, qui est agencée mobile dans l'espace de boîtier (9) par rapport à l'axe longitudinal central (L) et orientée coaxialement par rapport à l'axe longitudinal central (L) à l'état de repos,
et
- comprend au moins un élément à ressort (22, 23) par l'intermédiaire duquel la masse amortissante (16) est maintenue de manière élastiquement mobile sur le boîtier (2) par rapport à l'axe longitudinal central (L) du dispositif (1) au moins dans la direction périphérique de la masse amortissante (16),
**caractérisé en ce que**
un interstice (21) qui est rempli d'un liquide amortisseur visqueux est présent entre une surface périphérique (14) de la masse amortissante (16) et une surface interne (20) du boîtier (2) et que la largeur intérieure (WL) de l'interstice (21) rempli du liquide visqueux est réglable.

2. Dispositif selon la revendication 1, **caractérisé en ce que** l'élément à ressort (22, 23) est élastique dans une direction orientée parallèlement à l'axe longitudinal central (L), dans une direction orientée radialement par rapport à l'axe longitudinal central (L) et/ou dans la direction périphérique de la masse amortissante (16).

3. Dispositif selon la revendication 2, **caractérisé en ce que** l'élément à ressort (22, 23) est réalisé en forme de barre et son axe longitudinal (L) est orienté, à l'état de repos, parallèlement à l'axe longitudinal central (L).

4. Dispositif selon l'une quelconque des revendications précédentes, **caractérisé en ce que** la masse amortissante (16) est maintenue sur le boîtier (2) au moyen d'au moins trois éléments à ressort (22, 23).

5. Dispositif selon la revendication 4, **caractérisé en ce que** les éléments à ressort (22, 23) sont agencés à des écarts angulaires réguliers autour de l'axe longitudinal central (L).

6. Dispositif selon l'une quelconque des revendications précédentes, **caractérisé en ce que** l'interstice (21) rempli du liquide visqueux est réalisé entre une première surface inclinée (20), qui est réalisée sur la périphérie extérieure de la masse amortissante (16) et est orientée de manière inclinée par rapport à l'axe longitudinal central (L), et une seconde surface inclinée (14), qui est agencée sur la face intérieure du boîtier (2) associée à l'espace de boîtier (9) à l'opposé de la surface inclinée (20) de la masse amortissante (16) et orientée de manière inclinée conformément à l'orientation inclinée de la première surface inclinée (20) par rapport à l'axe longitudinal central (L), et qu'un dispositif de réglage pour régler la position relative de la masse amortissante (16) et du boîtier (2) dans la direction (X) orientée parallèlement à l'axe longitudinal central (L) est prévu.

7. Dispositif selon les revendications 5 et 6, **caractérisé en ce que** les surfaces inclinées (14, 20) de la masse amortissante (16) et du boîtier (2) sont respectivement réalisées en tant que surfaces coniques tournant autour de l'axe longitudinal central (L).

8. Dispositif selon l'une quelconque des revendications 6 ou 7, **caractérisé en ce que** les surfaces inclinées (14, 18) sont orientées parallèlement entre elles.

9. Dispositif selon l'une quelconque des revendications 6, 7 ou 8, **caractérisé en ce que** le dispositif de réglage pour régler la position relative de la masse amortissante (16) et du boîtier (2) comprend
- un élément porteur (24), qui est maintenu de manière coulissante sur le boîtier (2) dans une position axiale respective parallèlement à l'axe longitudinal central (L) et auquel est accouplé côté boîtier le au moins un élément à ressort (22, 23) maintenant la masse amortissante (16),
et
- un élément de réglage (33) agissant entre le boîtier (2) et l'élément porteur (24), qui maintient l'élément porteur (24) dans la position axiale respective.

10. Dispositif selon la revendication 9, **caractérisé en ce que** l'élément porteur (24) est réalisé comme un élément entourant annulairement l'axe longitudinal central (L).

11. Dispositif selon la revendication 9 ou 10, **caractérisé en ce que** l'élément porteur (24) est logé dans une ouverture (11) qui est prévue sur une face frontale (10) du boîtier (2), et que l'élément porteur (24) assure l'étanchéité de l'espace de boîtier (9) sur cette face frontale (10) par rapport à l'environnement (U).

12. Dispositif selon l'une quelconque des revendications précédentes, **caractérisé en ce que** l'espace de boîtier (9) est complètement étanche par rapport à l'environnement (U) et que l'espace de boîtier (9) est rempli du liquide amortisseur visqueux.

13. Dispositif selon l'une quelconque des revendications précédentes, **caractérisé en ce que** le liquide amortisseur visqueux est une huile avec une viscosité nominale > 5 mm²/s.

14. Dispositif selon l'une quelconque des revendications précédentes, **caractérisé en ce que** la largeur intérieure (WL) de l'interstice (21) rempli du liquide visqueux est égale à 0,1 - 1,0 mm.
